(19)

Europäisches
Patentamt
European
Patent Office
Office européen
des brevets

(11) **EP 3 846 073 A1**

(12) **EUROPEAN PATENT APPLICATION**

(43) Date of publication:
07.07.2021 Bulletin 2021/27

(51) Int Cl.:
*G06K 9/00* (2006.01)          *G06K 9/62* (2006.01)

(21) Application number: 20150382.8

(22) Date of filing: 06.01.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(71) Applicant: Visteon Global Technologies, Inc.
Van Buren Township, MI 48111 (US)

(72) Inventors:
• KARAMANOV, Nikola
  1113 Sofia (BG)

• PFEIFLE, Martin
  72297 Seewald (DE)
• ZELLER, Niclas
  85764 Oberschleißheim (DE)
• GEORGIEV, Ivo Plamenov
  1309 Sofia (BG)
• SCHULZE, Matthias
  75417 Muehlacker (DE)

(74) Representative: Dummett Copp LLP
25 The Square
Martlesham Heath
Ipswich IP5 3SL (GB)

(54) **SYSTEMS AND METHODS FOR PROVIDING A REPRESENTATION OF LANES ON A ROADWAY**

(57) Systems and methods for providing a probabilistic representation of an arrangement of lanes on a roadway for use in ADAS and autonomous vehicle applications are disclosed. In an example, an importance sampling method is used in which a plurality of lane arrangement scenarios are defined in a model. A probability distribution $P$ for the scenarios is determined using input from sensor data, and a proposal distribution $Q$ is determined based on simplified inputs. A plurality $K$ of lane arrangement scenarios $s$ are sampled from the proposal distribution $Q$, and an importance weight $w_s$ for each of the plurality $K$ of sampled lane arrangement scenarios $s$ such that $w_s = P(s)/Q(s)$ for each sampled lane arrangement scenario $s$. The sampled lane arrangement scenarios $s$ and associated importance weights $w_s$ together provide the probabilistic representation of the arrangement of lanes on the roadway.

Fig. 6A          Fig. 6B

Fig. 7

## Description

TECHNICAL FIELD

Embodiments herein generally relate to methods for providing a representation of the arrangement of lanes on a roadway relative to the position of an ego vehicle, in particular for use in advanced driver assistance systems and autonomous vehicles.

BACKGROUND

Advanced driver assistance systems (ADAS) in vehicles and autonomous vehicle control systems rely on sensing aspects of the environment surrounding an ego vehicle to estimate the position of the vehicle relative to nearby objects and environmental features. For example, it can be useful to understand the position of the vehicle in relation to the lane arrangement on the ground surface surrounding the vehicle.

The arrangement of lanes on a roadway is typically defined by road markings (pavement markings), and in particular by lane markings. Lane markings may indicate boundaries between lanes, including instances where lanes merge or diverge. Lane markings may also indicate the boundaries of the roadway. Knowledge of such lane arrangement information may therefore allow an ADAS or autonomous vehicle control system to estimate the current position of the ego vehicle and other vehicles relative to the lane structure of the road and to predict the trajectory of the vehicles relative to that lane structure, and is therefore useful in a range of functions, such as lane-keeping, lane switching, junction navigation, highway exit/entry and so on.

In known systems, information relating to the position of lane markings may be derived from image data, collected by one or more images mounted on the vehicle. However, estimations of lane marking positions and the resulting predictions of the structure of the lane arrangement may be inaccurate or ambiguous, for example due to uncertainties in image analysis, obscuration of features in the images, limited data capture from outside the immediate vicinity of the vehicle, and so on. It may therefore be desirable to provide a more accurate representation of the arrangement of lanes on a roadway.

SUMMARY

A method for providing a probabilistic representation of an arrangement of lanes on a roadway in an environment of an ego vehicle at a current time $t$ is disclosed. The ego vehicle has a sensor system for capturing sensor data from at least part of the roadway. The method comprises defining a plurality of lane arrangement scenarios in a model of the environment, each scenario being described by a plurality of model variables, and identifying a plurality of lane arrangement presumptions $i$, each lane arrangement presumption $i$ defining an expected characteristic of an arrangement of lane markings in the model. The method further comprises defining a set of first presumption functions $\Phi_i$ and a set of second presumption functions $\Psi_i$, each presumption function $\Phi_i$, $\Psi_i$ outputting a value dependent upon the adherence of one or more of the model variables of a respective lane arrangement scenario to a corresponding lane arrangement presumption $i$. The set of second presumption functions $\Psi_i$ is of reduced complexity compared to the set of first presumption functions $\Phi_i$, and at least one of the first presumption functions $\Phi_i$ is dependent on sensor data derived from the sensor system.

The method further comprises defining, using the set of first presumption functions $\Phi_i$, a probability distribution $P$ describing a probability of a given lane arrangement scenario being present in the environment at the current time $t$, and defining, using the set of second presumption functions $\Psi_i$, a proposal distribution $Q$ describing an alternate probability of a given lane arrangement scenario being present in the environment at the current time $t$. The method also comprises sampling lane arrangement scenarios from the proposal distribution $Q$ to provide a plurality $K$ of sampled lane arrangement scenarios $s$, and determining an importance weight $w_s$ for each of the plurality $K$ of sampled lane arrangement scenarios $s$ such that $w_s = P(s)/Q(s)$ for each sampled lane arrangement scenario $s$. The sampled lane arrangement scenarios $s$ and associated importance weights $w_s$ together provide the probabilistic representation of the arrangement of lanes on the roadway at the current time $t$.

The resulting probabilistic representation of the arrangement of lanes can be used by an ADAS client or autonomous vehicle control system client to provide statistically significant information on the layout of the lanes relative to the ego vehicle.

The method may comprise estimating an expected value $E_P$ under the probability distribution $P$ of an output function $f(s)$ by summing the values of the output function $f(s)$ for each of the plurality $K$ of sample lane arrangement scenarios $s$, weighted by the corresponding importance weight $w_s$.

In an example, the output function $f(s)$ provides an expected value of each of the model variables, thereby to output an estimate of the expected lane arrangement in terms of the model variables. The method may further comprise estimating an expected value $E_P$ under the probability distribution $P$ of a further output function $f(s)$, said further output function $f(s)$ providing a squared deviation from the expected value of at least one of the model variables.

In another example, the output function $f(s)$ provides a decision-theoretic output relating to an ADAS or autonomous vehicle function. For example, the output function $f(s)$ may provide an optimal trajectory for the ego vehicle.

The sensor system of the ego vehicle may comprise a camera system. In this case, the method may further comprise receiving an image of the environment from the camera system, analysing the image to determine a set of lane marking likelihood values for a set of pixel units of the image, and mapping the lane marking likelihood values to a reference frame, such as a reference frame of the ego vehicle. At least one of the first presumption functions $\Phi_i$ may be dependent on the mapped lane marking likelihood values.

The method may comprise determining the probability distribution $P$ from an energy function $E$ comprising a linear combination of output values of the first presumption functions $\phi_i$ evaluated at a preceding time ($t$ - 1) and at the current time $t$. Each output value may be weighted by a weight factor $\alpha_i$. Similarly, the method may comprise determining the proposal distribution $Q$ from an energy function $E'$, and the energy function $E'$ may comprise a linear combination of output values of the second presumption functions $\Psi_i$ evaluated at the current time $t$. Each output value may be weighted by a weight factor $\beta_i$.

The method may incorporate a particle filtering or re-sampling method. Thus the method may comprise, after determining the importance weight $w_s$ for each of the plurality $K$ of sample lane arrangement scenarios $s$, defining a multinomial distribution $R$ for which the probability of sampling a scenario is given by the determined importance weight $w_s$ of that scenario $s$ divided by the linear sum of the importance weights $w_s$ of the plurality $K$ of sampled lane arrangement scenarios $s$, and sampling lane arrangement scenarios from the multinomial distribution $R$ to provide a plurality $K_r$ of re-sampled lane arrangement scenarios $s_r$. An updated proposal distribution $Q'$ may be defined based on the plurality $K_r$ of re-sampled lane arrangement scenarios $s_r$. Then, the method may comprise sampling lane arrangement scenarios $s'$ from the updated proposal distribution $Q'$ to provide a further plurality $K'$ of sampled lane arrangement scenarios $s'$. The method may comprise determining an importance weight $w_{s'}$ for each of the further plurality $K'$ of sampled lane arrangement scenarios $s'$ using the updated proposal distribution $Q'$.

The method may further comprise defining an updated probability distribution $P'$ to describe the probability of a given lane arrangement scenario being present in the environment at a subsequent time $t$ + 1 and, before determining the updated proposal distribution $Q'$, transforming each of the plurality $K_r$ of re-sampled lane arrangement scenarios $s_r$ to a subsequent time $t$ + 1, such that the updated proposal distribution $Q'$ describes the alternate probability of a given lane arrangement scenario being present in the environment at the subsequent time $t$ + 1. The updated importance weight $w_{s'}$ for each of the further plurality $K'$ of sample lane arrangement scenarios $s'$ may then be determined using the updated probability distribution $P'$ such that $w_{s'}$ = $P'(s')/Q'(s')$. In this case, the updated importance weights $w_{s'}$ and associated sample lane arrangement scenarios $s'$ may provide a probabilistic representation of the arrangement of lane markings on the roadway at the subsequent time $t$ + 1.

A system for providing a probabilistic representation of an arrangement of lanes on a roadway in an environment of an ego vehicle at a current time $t$ is also disclosed. The system comprises a sensor system configured to capture sensor data from at least part of the roadway, a data storage component, and a processor.

The data storage component may be configured to store a model of the environment describing a plurality of lane arrangement scenarios, each scenario being described by a plurality of variables of the model, a set of first presumption functions $\Phi_i$ and a set of second presumption functions $\Psi_i$, each presumption function $\Phi_i$, $\Psi_i$ outputting a value dependent upon the adherence of one or more of the model variables of a respective lane arrangement scenario to a corresponding lane arrangement presumption $i$. The set of second presumption functions $\Psi_i$ is of reduced complexity compared to the set of first presumption functions $\Phi_i$ and at least one of the first presumption functions $\Phi_i$ is dependent on sensor data.

The processor may be configured to define, using the set of first presumption functions $\Phi_i$, a probability distribution $P$ describing a probability of a given lane arrangement scenario being present in the environment at the current time $t$. The processor may be further configured to define, using the set of second presumption functions $\Psi_i$, a proposal distribution $Q$ describing an alternate probability of a given lane arrangement scenario being present in the environment at the current time $t$.

The processor may be configured to sample lane arrangement scenarios from the proposal distribution $Q$ to provide a plurality $K$ of sampled lane arrangement scenarios $s$, determine an importance weight $w_s$ for each of the plurality $K$ of sampled lane arrangement scenarios $s$ such that $w_s$ = $P(s)/Q(s)$ for each sampled lane arrangement scenario $s$, and output a probabilistic representation of the arrangement of the lanes based on the sampled lane arrangement scenarios $s$ and associated importance weights $w_s$.

The processor may be further configured to determine the set of first presumption functions $\Phi_i$ and/or the set of second presumption functions $\Psi_i$, and to store the set of first presumption functions $\Phi_i$ and/or the set of second presumption functions $\Psi_i$ in the data storage component. Alternatively, the set of first presumption functions $\Phi_i$ and/or the set of second presumption functions $\Psi_i$ may be pre-defined and stored in the data storage component for subsequent use.

The processor may be further configured to estimate an expected value $Ep$ under the probability distribution $P$ of an output function $f(s)$ by summing the values of the output function $f(s)$ for each of the plurality $K$ of sample of lane arrangement scenarios $s$, weighted by the corresponding importance weight $w_s$, and to output the expected value $Ep$ to a client, such as an ADAS client or autonomous vehicle control system client.

BRIEF DESCRIPTION OF THE DRAWINGS

Figures 1A and 1B show example images of a multilane road environment, as captured by a forward-facing camera of an ego vehicle;

Figures 2A and 2B illustrate, in plan view, examples of first possible lane arrangements for the environment shown in Figures 1A and 1B, respectively;

Figures 3A and 3B illustrate, in plan view, examples of second possible lane arrangements for the environment shown in Figures 1A and 1B, respectively;

Figure 4 illustrates a method of determining importance weights for a plurality of lane arrangement scenarios;

Figure 5 illustrates a method of estimating expected values of output functions from the result of the method of Figure 4;

Figures 6A and 6B show two possible lane arrangement scenarios, each scenario having an associated importance weight;

Figure 7 shows an expected lane arrangement, determined from the scenarios in Figures 6A and 6B;

Figure 8 illustrates a method of estimating expected values of further output functions from the result of the method of Figure 4;

Figure 9 illustrates a method of using image data in the method of Figure 4;

Figure 10 illustrates a method of using a re-sampling process to update the result of the method of Figure 4;

Figure 11 illustrates a method of using a re-sampling process to determine an updated result of the method of Figure 4 for a subsequent time step;

Figures 12A and 12B illustrate, in plan view, a lane arrangement before and after a transformation step in the method of Figure 11; and

Figure 13 shows a system suitable for implementing the methods described herein.

DETAILED DESCRIPTION

Embodiments described herein relate to methods for providing a probabilistic representation or estimation of the arrangement of lanes on a roadway, and the position of a vehicle in relation to the lane boundaries.

In this context, the term "arrangement" is used to refer to a plurality of variables that together describe the position of the lanes of the roadway with respect to the environment and/or the ego vehicle. Such variables may include, for example, the number of lanes, the spatial trajectory of each lane, the width of each lane, and the relationship of the lanes to each other and to the roadway and/or the ego vehicle.

ADAS and autonomous vehicle control systems may utilise such lane arrangement information to discern the arrangement of lanes in the immediate vicinity of the ego vehicle, and also the arrangement of lanes ahead of a moving vehicle, and to take decisions based on such information. For example, lane arrangement information may be used to choose an optimal ego vehicle trajectory or appropriate speed, or to decide whether to change lanes.

In this description, the terms advanced driver assistance system (ADAS) and autonomous vehicle control system are used to describe any system that provides assistance to a driver or any level of automatic or automated control of vehicle systems. The methods and systems herein apply particularly to ADAS and automated vehicle control systems of SAE Level 3 and above, although utility may also be found in SAE Level 1 and Level 2 systems.

In practice, it may not be possible directly to determine an accurate determination of the arrangement of lanes for an ADAS or autonomous vehicle function, particularly in respect of the arrangement ahead of the vehicle, using the data available. For example, the available data may not cover all of the area of interest. Embodiments described herein provide methods that use the available data to describe a statistically useful representation of the arrangement of the lanes.

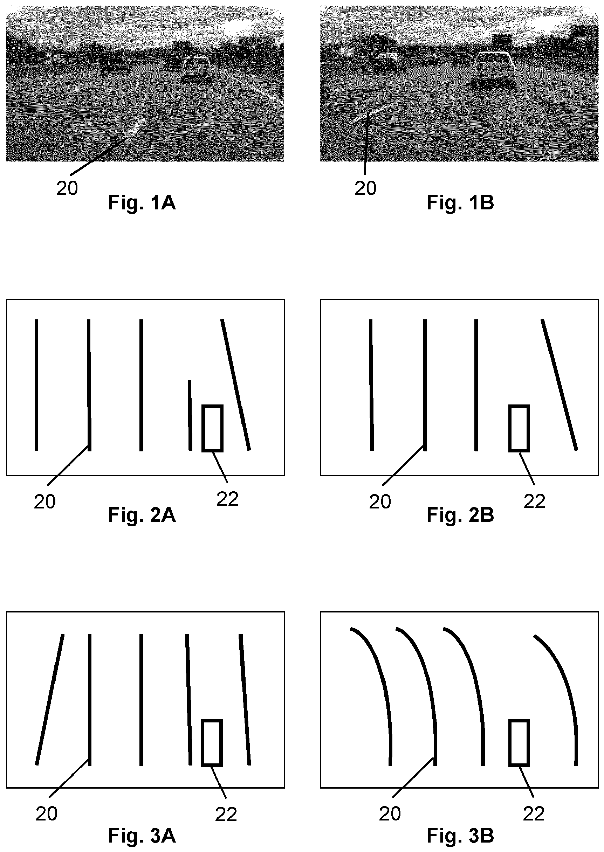

Figures 1A and 1B are illustrative examples of images captured from a front-facing camera of an ego vehicle. In each image, lane markings 20 are visible. However, as is illustrated in Figures 1A and 1B, such markings 20 may be visible only for a relatively short distance ahead of the ego vehicle and may be obscured by other vehicles. Also, lane markings may be poorly maintained, or hidden from view if the road is curved or inclined.

Accordingly, the observable lane markings 20 at a given position of the ego vehicle may not be sufficient to identify the arrangement of lanes with a high degree of accuracy. Instead, the available image data may be consistent with a plurality of possible lane arrangements. Figures 2A and 3A, for example, show two possible lane arrangement scenarios (in plan view and including the position of the ego vehicle 22) which may be consistent with the observable lane markings 20 in Figure 1A. Similarly, Figures 2B and 3B show two possible lane arrangement scenarios that may be consistent with the observable lane markings 20 in Figure 1B.

It will be appreciated that, in general, a very large number of different lane arrangements may arise. For example, lane arrangements may consist of or incorporate uninterrupted straight lanes, merging lanes, diverging lanes, exit lanes, entry lanes, various types of junctions, changes in lane width, road curvature, and other features.

In one example, the multiple possible arrangements of lanes can be described in terms of state random variables in a probabilistic model. The term "lane arrangement scenario" refers to a particular state of the random variables, corresponding to a particular arrangement of lanes with respect to the position of the ego vehicle. In this example, the method generates as an output a probabilistic representation of the actual arrangement of lanes in the environment of the ego vehicle. The probabilistic representation takes the form of a set of lane arrangement scenarios, each with associated importance weights. The importance weight for a scenario gives an indication of the likelihood of that scenario corresponding to the actual arrangement of lanes at the current time.

As will be described in more detail below, the resulting set of lane arrangement scenarios and associated importance weights can be used in a variety of ways for ADAS or autonomous vehicle functions. For example, the most likely lane arrangement scenario can be readily determined. However, the representation provided by the method can also provide information relating to the likelihood of alternative scenarios in a given situation, allowing decision-making based for example on the likelihood of scenarios that carry a high significance in terms of collision avoidance or safety, even if such scenarios have a relatively low likelihood of accurately describing the actual lane arrangement.

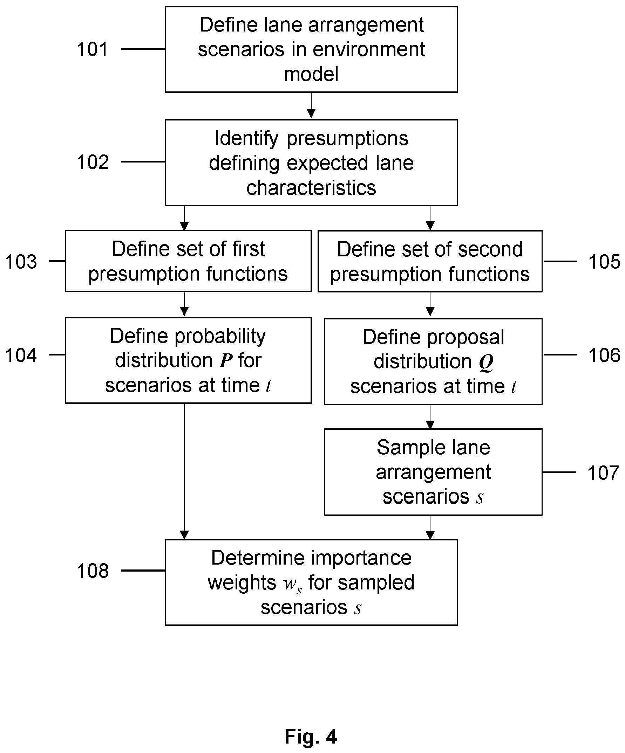

Figure 4 shows a series of steps in this example of the method. In step 101, possible arrangements of the lanes are defined in a model of the environment. In this example, the arrangement of the lanes is modelled using a suitable graphical model. In one such graphical model, each lane boundary is modelled by a third-order polynomial function, which describes the shape of the lane boundary in 2-dimensional space and relative to a reference frame of the ego vehicle. The position of the lane boundary, relative to the vehicle reference frame, is modelled by another parameter or function. Each lane boundary has an associated existence status, which reflects the appearance and disappearance of lanes (such as when lanes split or merge).

Lane arrangement scenarios, such as those illustrated in Figures 2A, 2B, 3A and 3B, are defined in the graphical model by the values for the various variables that describe the lane boundaries in the scenario. A large number of possible lane arrangement scenarios can be defined in this way, so that the modelled scenarios include substantially all of the plausible and non-trivially different lane arrangements for the ego vehicle environment. The lane arrangement scenarios may be pre-defined based on a knowledge of possible lane arrangements, or could be learned in a machine-learning process using suitable training data.

Optionally, sensor data from cameras and other sensor systems of the ego vehicle may be used to set constraints, parameters or variables of the model, or to eliminate certain scenarios as possibilities. Such data may include image data, LIDAR data, map and position (e.g. GPS) data, compass data, speed and heading, odometry and so on. The position and movement of other vehicles on the roadway, as determined by such sensor data, may also be used to inform the model and/or the scenarios.

In step 102, a plurality of presumptions $i$ are identified. Each presumption expresses some expected characteristic of the lane boundary lines forming the lane arrangements. These presumptions (which can also be referred to as statistical regularities) reflect empirical properties of lanes and/or lane markings, which are presumed to be upheld in at least some lane arrangement scenarios.

Various types of presumption may be identified. For instance, spatial presumptions may specify that lane boundaries are usually parallel, equally spaced and exist in pairs, and that lanes tend to follow the shape of the road. Temporal presumptions specify that lane boundaries do not typically appear or disappear suddenly (i.e. within a short time period) and tend to keep their shape. Typically, the presence of lane boundaries changes gradually, for example when lanes merge.

Sensor consistency presumptions reflect that the lane arrangement in the vicinity of an ego vehicle is usually consistent with the available sensor data obtained from sensors on the ego vehicle. These sensor consistency presumptions therefore provide a way to compare the possible lane arrangement scenarios with sensor data.

Such sensor data may be collected from the vehicle environment by a sensor system of the ego vehicle. In an embodiment, the sensor system comprises one or more cameras mounted on the vehicle. The cameras are arranged to capture images of the environment. Using known image analysis techniques, the images can be analysed to obtain a lane marking likelihood value for each pixel unit of the image (a pixel unit comprising a single pixel or group of pixels). The lane marking likelihood for a pixel unit describes the probability of a lane marking being present in that pixel unit. A suitable transformation function can be used to map the image data from image coordinates into the reference frame of the vehicle or another suitable reference frame.

Since lane boundaries usually coincide with the presence of lane markings, a sensor consistency presumption can be based on the expectation that the lane boundary lines in an accurate scenario should agree with the lane marking likelihoods determined from the image data.

In some embodiments, the sensor system includes other types of sensors, and further sensor consistency presumptions may relate to additional data from these sensors and other sources. Such data may include LIDAR data, map and position (e.g. GPS) data, compass data, speed and heading, odometry and so on.

Presumptions may be geographically dependent, such that geographical variations in lane properties can be taken into account, such as differences between countries or between rural and urban environments.

The presumptions together provide a set of "soft" rules for lane arrangements that are at least to some extent adhered to. The extent to which the variables of a lane arrangement scenario depart from the presumptions can therefore be used to determine a probability of a particular scenario.

In step 103 of Figure 4, the presumptions identified in step 102 are quantified by defining a set of first presumption functions. Each presumption function is dependent upon the value of one or more model variables and outputs a value which indicates the extent to which the model variables for a given scenario adhere to or diverge from the corresponding presumption.

By way of example, a presumption function $\Phi_y$, may express the expected spatial relationship between points on the lane boundaries. $\Phi_y$, may be expressed as:

$$\Phi_y(y) = \sum_{m=1}^{M} w_{lkm} \sum_{l<k} \phi_m\left(y_{lm}^{lat}, y_{km}^{lat}\right)$$

where $y_{lm}^{lat}$ and $y_{km}^{lat}$ describe the lateral positions of lane boundary lines $l$ and $k$ at a given point $m$ (e.g. at a certain distance ahead of the ego vehicle), and $\phi_m$ is a function that compares the lateral positions $y_{lm}^{lat}$, $y_{lm}^{lat}$ in a pairwise manner against an expected characteristic (such as an expected spacing between the lines). $\phi_m$ outputs a higher value when the lateral positions deviate further from the expected characteristic. $\Phi_y$, is the weighted sum over $M$ points of $\phi_m$, evaluated at each point $m$ and weighted by a weighting parameter $w_{lkm}$. The weighting parameter $w_{lkm}$ may, for example, apply a greater weight to points $m$ and lines $l$, $k$ that are closer to the ego vehicle than those further away.

Another presumption function $\Phi_{ht}$ may express the expected temporal persistence of the lane boundaries:

$$\Phi_{ht}(h^t, h^{t-1}) = \sum_{l,k} \alpha_{lk}\,(\Delta_t)h_l^t h_k^{t-1}$$

where $h^t$ is the existence status of each lane boundary at time $t$, and $h^{t-1}$ is the existence status of each lane boundary at time $t$-1. The internal weight parameter $\alpha_{lk}$ provides for adjustment of the values for each line in this function, including an adjustment dependent on the length of time $\Delta t$ between $t$ and $t$-1.

At least one of the first presumption functions is based on a sensor consistency presumption, and is therefore dependent on sensor data values. In an embodiment, sensor data is incorporated into the presumption functions in the form of lane marking likelihood values.

By way of example, a presumption function $\Phi_x$ relating to lane marking likelihoods is given by:

$$\Phi_x(x, y, h) = \sum_{l} a_l\, h_l g(x; y_l)$$

where $h_l$ is the existence status of the lane boundaries $l$, and $g$ is a function which describes how well points $y_l$ on a lane boundary match the lane marking likelihoods $x$. In this presumption function, $a_l$ is an internal weight parameter for each lane boundary $l$, allowing for adjustment of the contribution of each lane boundary within this function.

Some presumption functions may be linked because they incorporate the same properties of the lane boundaries. For instance, presumption functions based on the presumptions of lane boundaries being parallel and lane boundaries being equally spaced apart are both dependent on the width of the lane.

Also, some presumption functions may express conflicting presumptions, such that in some situations when one presumption is upheld, the probability of another presumption being upheld is lower. For example, where lanes change width at a lane merging point, a presumption that lane boundary shape changes gradually may be upheld while a presumption that lane width is constant may be violated.

The presumptions identified in step 102 of Figure 4, and the presumption functions defined in step 103, may be pre-determined based on known lane arrangement characteristics. For example, the presumption functions used in the energy function (and their associated weights) may be chosen by reference to datasets collected on the 'real world' incidence of different lane markings and scenarios. Such data can be derived from sensor data collected from vehicles, and/or from map data.

Alternatively, or in addition, presumptions may be identified and/or presumption functions may be defined by a suitable machine-learning method, for example by training a neural network to identify presumptions using sample lane arrangement data. In such cases, one or more presumption functions may be defined that do not directly express observable characteristics of the lane arrangements, but instead reflect more subtle relationships between the variables. It will also be appreciated that steps 102 and 103 may be performed substantially simultaneously, such that the definition of a presumption function effectively identifies the corresponding underlying presumption.

The presumption functions output a larger value when the variables deviate from a presumption. Therefore, less probable lane arrangements, in which one or more presumptions are not upheld, result in a larger value of the corresponding presumption functions. In this way, the probability of a lane arrangement being present is reflected in the value of the presumption functions.

In step 104 of Figure 4, a model probability distribution $P$ is determined. The model probability distribution $P$ expresses the probability that a given lane arrangement scenario corresponds to the actual lane arrangement in the environment of the ego vehicle.

In one example, to determine the model probability distribution $P$, an energy function $E$ is defined as a linear sum of each of the set of first presumption functions over each presumption $i$ and over time $t$:

$$E = \sum_{i,t} \alpha_i \Phi_{it}$$

$\alpha_i$ is a presumption function weight which governs the contribution of a corresponding presumption function to the energy function.

The probability distribution $P$ over the model variables is then defined by the proportional relationship:

$$P \propto e^{-E}.$$

The value of $P$ for a given scenario can be obtained using a normalizing constant set so that the sum of $P$ over all scenarios is unity.

The energy function $E$ provides an energy value for each lane arrangement scenario. Since the value of each of the presumption functions $\Phi$ increases with the extent to which the lane arrangement in a scenario departs from the presumptions, the magnitude of the energy function increases with the number of presumptions that are not upheld and with the extent to which the arrangement departs from those presumptions. Because the set of first presumption functions includes one or more functions that reflect consistency with sensor data, the energy function will have a higher value for scenarios that are less likely to correspond to the actual lane arrangement, and a lower value for scenarios that are a closer match to the actual lane arrangement.

The function weight $\alpha_i$ allows the effect of the presumption functions in the probability distribution to be adjusted. For each presumption function, the corresponding value of $\alpha_i$ may be varied for a number of reasons. For example, the value of $\alpha_i$ may reflect the likelihood of that presumption being broken, as determined by empirical observation. Also, the value of $\alpha_i$ may incorporate a measure of the implications of departure from the corresponding presumption. For instance, it may be known that the degree of adherence to a particular presumption has only a small effect on the probabilities of different scenarios, in which case $\alpha_i$ may be set to a relatively low value to reduce the contribution of that presumption function in the energy function. The values of $\alpha_i$ may be pre-defined by reference to scenario datasets or map data. $\alpha_i$ may also be set by a user, or may be learned, for example through a machine-learning process.

It will be appreciated that since the value of $\alpha_i$ determines the contribution of a presumption function to the energy function, the probability of a scenario under the distribution $P$ can be influenced by the set values of $\alpha_i$. In this way, $P$ can be adjusted to reflect how significant a particular presumption is perceived to be for determining scenario probability.

The contribution of each presumption function to the energy function may also be determined in part by the internal weight parameters of the presumption functions, as described above. Similarly to $\alpha_i$, these internal weight parameters may be pre-defined or learned.

From the definition of $P$, it can be seen that scenarios which depart from the presumptions to a greater extent (thus giving a larger value of $E$), will have a smaller probability under $P$. In this way, scenarios become less probable under $P$ as they depart from the expected presumptions $i$.

Since some of the set of first presumption functions incorporate the values of variables at a previous time point $t$ - 1, the distribution $P$ gives the probability of any lane scenario at a time $t$, given the sensor data at time $t$, and values of the variables in the previous scenario at $t$ - 1.

A large number of possible scenarios exist, and the probability distribution $P$ over the scenarios may be complex. Accordingly, sampling directly from $P$ may not be feasible. For example, the extent of sampling required to provide a close estimation of $P$ may be computationally expensive. Therefore, an importance sampling approach may be used to approximate the distribution more efficiently.

This approach generates an importance weight $w_s$ for each sampled scenario $s$. The importance weights $w_s$ may then be used to estimate expected values of functions under $P$, to identify likely scenarios for output to ADAS or autonomous vehicle functions such as determining optimal trajectory, speed, and lane position.

To this end, the method of Figure 4 comprises, at step 105, determining a set of second presumption functions and, at step 106, determining a proposal probability distribution.

The proposal probability distribution $Q$ is a simplified probability distribution which is used to approximate the more complex model probability distribution $P$. $Q$ is determined using an energy function in a similar manner to the distribution $P$:

$$Q \propto e^{-E'}$$

where $E'$ is an alternative energy function.

The alternative energy function $E'$ is defined as the linear sum of the set of second presumption functions $\Psi$:

$$E' = \sum_i \beta_i \Psi_{it}$$

where $\beta_i$ is a function weight that governs the contribution of a corresponding presumption function to the energy function. Similarly to $\alpha_i$, the function weight $\beta_i$ may be pre-defined, or learned.

In this case, the set of second presumption functions $\Psi$ are expressed in terms of the same presumptions $i$ and model variables ($x$, $h$, $y$ over $t$) as used in the set of first presumption functions. However, the set of second presumption functions is simplified compared to the set of first presumption functions, such that sampling scenarios from $Q$ is less computationally expensive than sampling from $P$. For example, the presumption functions in the set of second presumption functions may use approximations or proxies to determine values for the status of the presumptions $i$ from the values of the variables.

In a simple example, none of the set of second presumption functions $\Psi$ incorporate any information from sensor data, and so the proposal distribution $Q$ is independent of the sensor data. Also, the values of the presumption functions $\Psi$ may be summed for a single time point $t$, not over time points $t$ - 1 and $t$. In this way, the proposal distribution $Q$ may not incorporate the effect of previous scenarios.

In other embodiments, sensor data terms are included in at least one of the presumption functions $\Psi$ of the set of second presumption functions, and the values of the variables at $t$ - 1 may also be incorporated.

In some embodiments, some of the set of second presumption functions $\Psi$ may be the same as the set of first presumption functions $\Phi$, particularly those which do not include any sensor data terms.

As is known from the method of importance sampling, a proposal distribution may be used to generate samples in order to provide an efficient approximation of a distribution of interest. For instance, the proposal distribution may provide more extensive sampling of scenarios which are less probable under the distribution of interest, such that a more accurate approximation of that distribution may be achieved.

Referring back to Figure 4, at step 107, sample scenarios $s$ are drawn from the proposal distribution $Q$ in order to provide an efficient approximation of the distribution $P$. Each sample scenario $s$ comprises a set of values of the model variables, corresponding to a particular arrangement of the lane boundaries. Each sampled scenario $s$ has an associated probability, $Q(s)$.

In step 108 of Figure 4, an importance weight $w_s$ for each of the scenarios sampled from $Q$ is determined. The importance weight $w_s$ for a scenario $s$ is given by:

$$w_s = P(s)/Q(s)$$

$P(s)$ is the probability of the sample scenario $s$ under $P$, given the data at times $t$ and $t$ + 1.

The importance weight corrects for the fact that the scenarios were sampled under a proposal distribution $Q$, and not the true model probability distribution $P$. In this way, the importance weight provides an adjusted measure of the probability of a sampled scenario $s$.

The output of the method of Figure 4 is therefore a set of possible lane arrangement scenarios s, each with a corresponding importance weight $w_s$. This set of data, taken as a whole, provides a probabilistic representation of the lane arrangement in the vehicle environment that can be input to subsequent processes. It will be understood that this representation does not take the form of a single most probable sampled scenario $s$, nor an estimated lane arrangement based on a weighted average of the sampled scenarios $s$, although both of these outputs can be readily determined from the representation if required. Instead, the representation describes the individual likelihood of multiple different scenarios. This additional information for example allows the likelihood of lane arrangements that have a critical or important effect on safety to be fully taken into account in subsequent decision-making processes.

For example, the sampled scenarios s and associated importance weights $w_s$ may be used to estimate an expected value or expectation under the model probability distribution $P$ for any function of the model variables. As is known from importance sampling methods, the expected value $E_P$ of a function $f(s)$ under $P$ is given by:

$$E_P[f(s)] \approx \frac{\sum_s w_s f(s)}{\sum_s w_s}$$

In this way, an expected value under $P$ can be estimated for different output functions $f(s)$, where each output function provides a prediction relating to the environment. The output predictions may be used in various ADAS or autonomous vehicle functions.

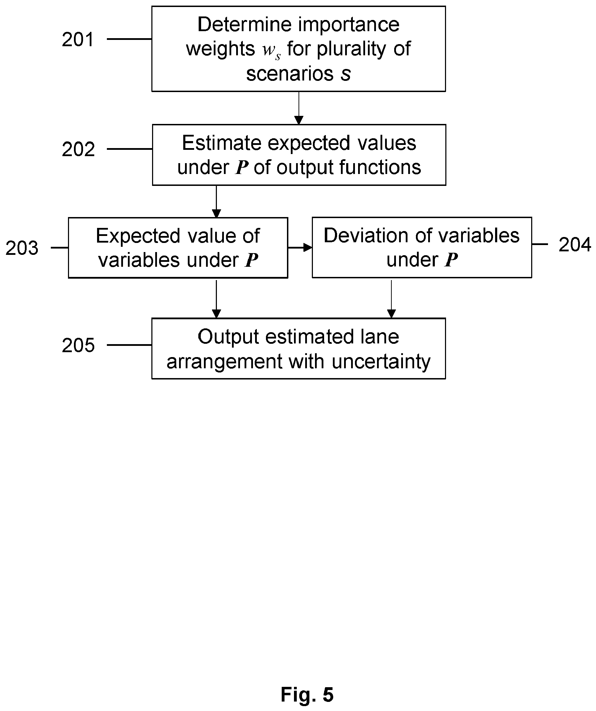

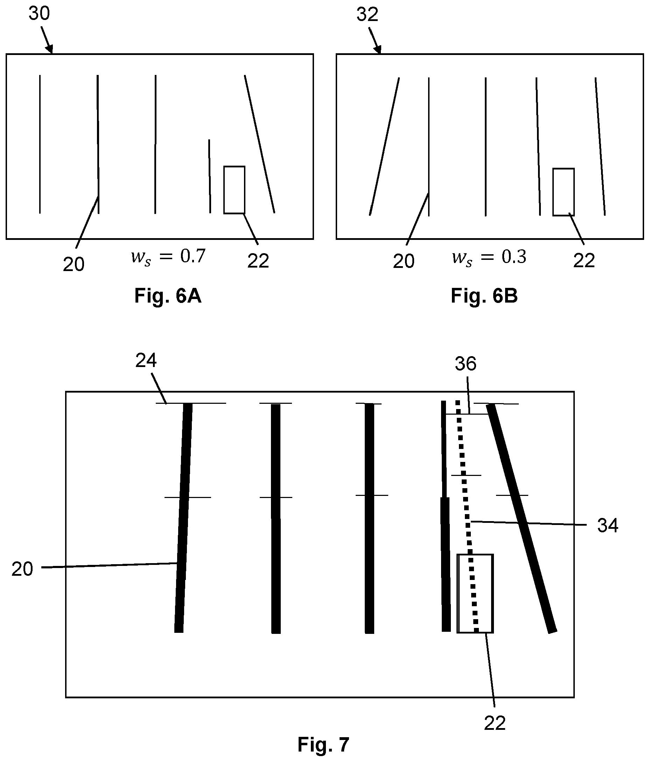

Figure 5 illustrates steps in an example method in which output functions are calculated. In step 201, the sampled scenarios s and associated importance weights $w_s$ are determined in accordance with the method of Figure 4. Figures 6A and 6B show, in schematic form, two scenarios 30, 32 that may be output from the method of Figure 4, with associated importance weights $w_s$. The

scenario 30 in Figure 6A has an importance weight of 0.7, while the scenario 32 in Figure 6B has an importance weight of 0.3. It will be appreciated that, in practice, a large number of further scenarios may be output from the method of Figure 4.

In step 202 of Figure 5, expected values are estimated for two output functions. A first function:

$$f(x) = x$$

provides the expected value of each of the model variables $x$ under $P$ (step 203).

In step 204, a second function:

$$f(x) = (x - E_P(x))^2$$

provides the expected squared deviation of each of the model variables $x$ under $P$ given the expected values $E_P(x)$ calculated in step 203.

The expected value of each of the model variables from step 203 can be used to construct an expected lane arrangement, representing the most probable arrangement of the lanes based on the outcome of the method of Figure 4. The deviation from step 204 provides a measure of uncertainty for each variable, and hence a measure of uncertainty for the expected lane arrangement. The expected lane arrangement and associated uncertainty are output in step 205. Figure 7 shows a schematic example based on the scenarios 30, 32 and associated importance weights $w_s$ of Figures 6A and 6B. The position of each lane boundary line 20 is the expected position as determined from the corresponding output function, with the determined standard deviation in position illustrated by horizontal bar uncertainty lines 24. The expected existence status (i.e. the likelihood of the expected lane boundary existing at a given position) is indicated by the width of each lane boundary line 20.

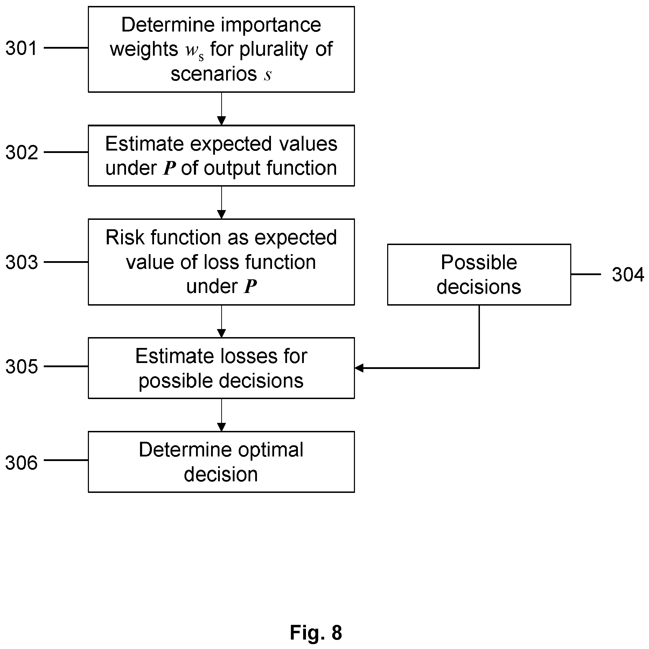

Figure 8 describes an example that uses more complex output functions, based on decision theory. After determining the sampled scenarios $s$ and associated importance weights $w_s$ in accordance with the method of Figure 4 (step 301), expected values of an output function are estimated (step 302). In this example, the output function is a loss function, so that applying the expectation results in a risk function (step 303). In step 304, a number of possible decisions are identified. Each possible decision may, for example, describe a proposed course of action that may be implemented by an ADAS function such as implementing a given trajectory, brake application, acceleration, steering intervention, driver warning, and so on, or some combination of these. The risk function can be evaluated to assess the expected loss resulting from each possible decision or course of action (step 305), given the lane arrangement information output by the method of Figure 4. In step 306, an optimal decision may be determined by minimising the value of the loss function against possible decisions. Referring back to Figure 7, an example optimal trajectory 34 is illustrated for the expected lane arrangement and ego vehicle position. The uncertainty in the optimal trajectory, which may be output by the decision function or by a further function, is indicated by the horizontal error bars 36.

In another example, the output function used in step 302 of Figure 8 may itself be a decision function, which provides as an expected value a decision given the lane arrangement information output by the method of Figure 4.

It will be appreciated that the methods of Figures 5 and 8 can be applied to any suitable output functions. The output functions may provide information to an ADAS client or autonomous vehicle control system client, in addition to or instead of the probabilistic representation of the lane arrangement. The client may then take suitable action. For instance, if the expected lane arrangement shows that the lanes ahead are tightly curved, the client may advise the driver to reduce the speed of the vehicle, or may automatically reduce the speed and/or provide steering control depending on the level of automation. In another example, the expected values of loss functions may be used by client functions during decision making, such as when deciding whether to execute a particular manoeuvre.

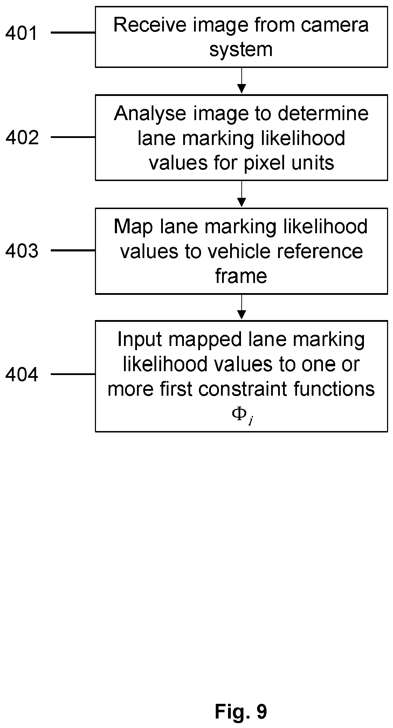

Figure 9 illustrates the use of image data in the method of Figure 4, in particular when evaluating the first constraint functions $\Phi_i$. In step 401, an image is received from a camera system of the vehicle. In step 402, the image is analysed, for example using known image analysis techniques, to determine lane marking likelihoods for each pixel unit of the image. In step 403, the lane marking likelihoods are mapped to the vehicle reference frame using a pre-defined transformation function for the camera system. Then, in step 404, the mapped lane marking likelihood values are input to the relevant first constraint functions $\Phi_i$. It will be appreciated that the camera system may include multiple cameras, so that more than one image of the roadway is obtained for a given time. These images may capture different regions of the roadway or may overlap. In this case, the images may be stitched together to provide a composite image before analysis, or the lane marking likelihoods may be determined for each image and then statistically combined to provide a suitable input for the relevant first constraint functions $\Phi_i$.

In some embodiments, a particle filtering process may be used to refine the output of the method of Figure 4. In this process, the importance-weighted scenarios generated in a first iteration are used to inform the proposal distributions defined in a following iteration.

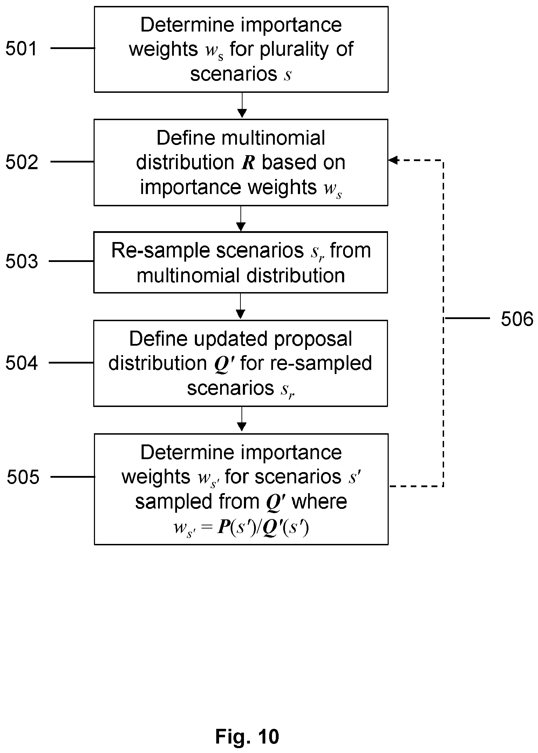

Referring to Figure 10, in step 501, the sampled scenarios $s$ and associated importance weights $w_s$ are determined in accordance with the method of Figure 4. Then, in step 502, a multinomial distribution $R$ is defined, in which the probability $R(s_r)$ of sampling a scenario $s_r$ is given by the determined importance weight of that scenario divided by the linear sum of the importance weights of the plurality $K$ of sampled lane arrangement scenarios:

$$R(s_r) = w_{s_r} / \sum_{s=1}^{K} w_s$$

In step 503, scenarios are re-sampled from the multinomial distribution $\boldsymbol{R}$ to generate a plurality $K_r$ of re-sampled lane arrangement scenarios $s_r$. In this way, more likely scenarios, with higher importance weights, are more likely to be resampled for use in the next step. Sampling may be with replacement, such that the same scenario may be sampled more than once.

Then, in step 504, an updated proposal distribution $\boldsymbol{Q'}$ is defined based on the plurality $K_r$ of re-sampled lane arrangement scenarios $s_r$. In particular, the re-sampled lane arrangement scenarios $s_r$ can be input to the set of second presumption functions $\Psi_i$ to define an updated alternative energy function $E'$ to determine the updated proposal distribution $\boldsymbol{Q'}$.

At step 505, a further plurality $K'$ of scenarios $s'$ is sampled from the updated proposal distribution $\boldsymbol{Q'}$, and the importance weight $w_{s'}$ of each sampled scenario $s'$ is determined to provide an updated probabilistic representation of the lane arrangements. The updated importance weights $w_{s'}$ in this case are given by:

$$w_{s'} = \frac{P(s')}{Q'(s')}$$

The result of the resampling process described in Figure 10 is a more accurate probabilistic representation of the lane arrangements at the current time $t$, for use in computation of an output function and/or by an ADAS client or autonomous vehicle client. The process can be repeated iteratively by repeating steps 502 to 505 any suitable number of times, as indicated by arrow 506 in Figure 10, with the updated importance weights $w_{s'}$ from one iteration being used to define the updated proposal distribution in the following iteration.

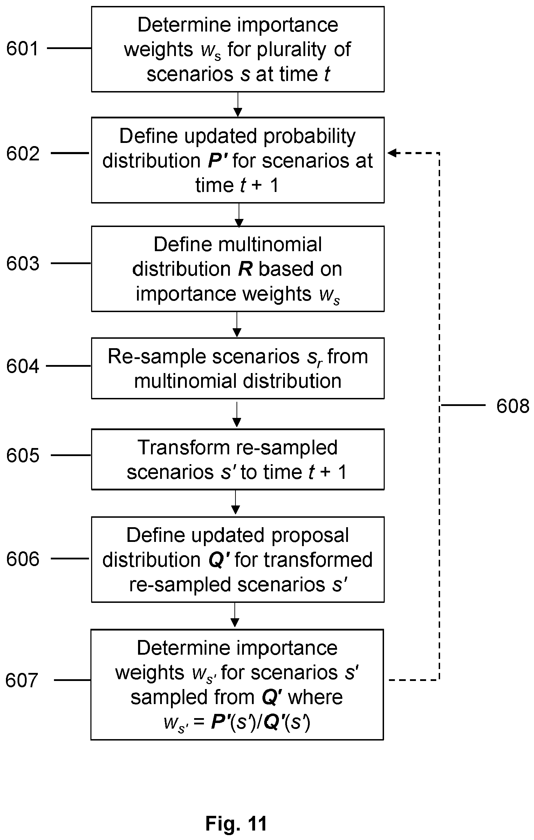

A variant of the method of Figure 10 can also be used to determine a more accurate probabilistic representation of the lane arrangements at a subsequent time $t + 1$. Referring to Figure 11, in step 601, sampled scenarios $s$ and associated importance weights $w_s$ are determined for a time $t$ in accordance with the method of Figure 4.

In step 602, an updated model probability distribution $\boldsymbol{P'}$ is defined. The updated model probability distribution $\boldsymbol{P'}$ describes the probability of a given lane arrangement scenario being present in the environment at a subsequent time $t + 1$, and may be obtained by inputting updated sensor data, retrieved at time $t + 1$, to the set of first presumption functions $\Phi_i$ when determining the energy function $E$ for the updated model probability distribution $\boldsymbol{P'}$.

At steps 603 and 604, a multinomial distribution $R$ is defined based on the importance weights $w_s$, and scenarios $s_r$ are re-sampled from that distribution $R$, as described above with reference to steps 502 and 503 of Figure 10.

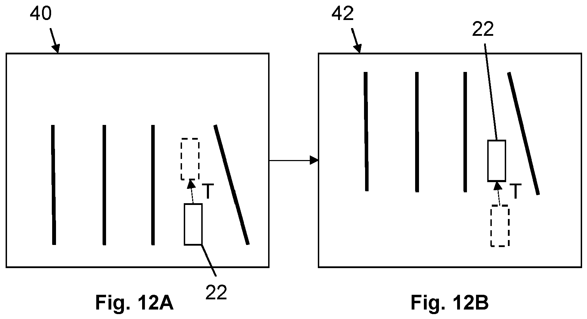

In step 605 of Figure 11, each of the re-sampled lane arrangement scenarios $s_r$ is transformed to a subsequent time $t + 1$. In this transformation step 605, available information regarding the movement of the vehicle, such as speed and heading from odometry and/or GPS data, is used to predict the trajectory of the ego vehicle. Figure 12A shows an example of a re-sampled scenario 40 before transformation, with the ego vehicle 22 at a first position, and Figure 12B shows the re-sampled scenario 42 after transformation, after movement of the vehicle 22 along a trajectory T to a second position.

In step 606, the transformed sample scenarios $s_r$ are used to define the updated proposal distribution $\boldsymbol{Q'}$. In this way, the updated proposal distribution $\boldsymbol{Q'}$ describes the alternate probability of a given lane arrangement scenario being present in the environment at the subsequent time $t + 1$.

Then, in step 607, a further plurality $K'$ of sample lane arrangement scenarios $s'$ are sampled from the updated proposal distribution $\boldsymbol{Q'}$, and updated importance weights $w_{s'}$ are determined for each of the sample lane arrangement scenarios $s'$, such that:

$$w_{s'} = \frac{P'(s')}{Q'(s')}$$

In this way, the method of Figure 11 provides a probabilistic representation of the arrangement of lane markings on the roadway at the subsequent time $t + 1$ for use in computation of an output function and/or by an ADAS client or autonomous vehicle client.

Steps 602 to 607 of the method of Figure 11 can be iteratively repeated for subsequent times, as indicated by arrow 608 in Figure 11, to provide probabilistic representations of the arrangement of lane markings at further subsequent times.

It will be appreciated that the methods of Figures 10 and 11 can be combined, for example so that a plurality of iterations of the method steps are performed at each time step before moving on to the subsequent time step.

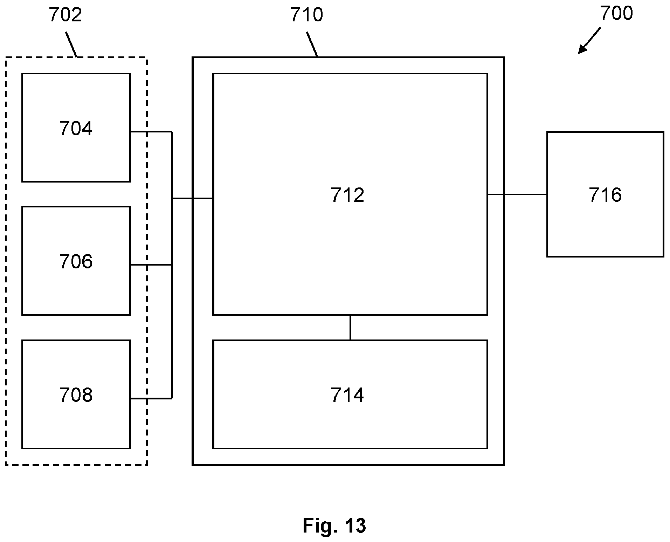

Figure 13 is a schematic illustration of a vehicle system 700 that is suitable for implementing the methods described herein.

The system 700 comprises a sensor system 702. The sensor system 702 in this example includes a camera system 704, arranged to capture image data from the vehicle environment, a LIDAR sensor 706 for capturing spatial information from the environment, and a GPS (global positioning system) receiver 708 for determining the GPS coordinates of the vehicle. The sensor system therefore captures information from the environment of the vehicle for use in the method steps, as described for example with reference to Figure 4 above.

The system further comprises a processor unit 710. The processor unit 710 includes a microprocessor 712 and a data storage component or memory 714.

The memory 714 stores the model of the environment and the plurality of lane arrangement scenarios defined in step 101 of Figure 4, along with the set of first presumption functions $\Phi_i$ and set of second presumption functions $\Psi_i$ defined in steps 103 and 105 of Figure 4. The processor 710 may be configured to determine the presumption functions substantially in real time and then store them in the memory 714, or alternatively the presumption functions may be pre-defined and loaded into the memory 714 before operation of the system 700.

The processor is configured to perform steps 104, 106, 107 and 108 of the method of Figure 4, in order to determine an importance weight for each of the plurality of sampled lane arrangement scenarios. This information is then output as a probabilistic representation of the arrangement of the lanes to a client 716 of the system 700. The client 716 may be an ADAS or autonomous vehicle control client. Optionally, the processor may be further configured to estimate an expected value $E_P$ under the model probability distribution **P** of an output function $f(s)$, and to output the expected value $E_P$ to the client 716.

The systems and methods of this disclosure can be embodied at least in part by artificial neural networks. Examples of suitable known networks for ADAS-equipped and autonomous vehicle applications include ShuffleNet and FD-MobileNet. It is however conceivable that other machine learning models could be employed.

The term "processor unit" as used herein may embody any combination of hardware and software useful for carrying out the methods described. The processor unit may, for example, include one or more microprocessors, one or more data storage devices, one or more user interfaces, one or more camera system interfaces, and/or one or more communication devices. The processor unit may be disposed in the vehicle in its entirety, but it is also conceivable that one or more elements or components of the processor unit could be disposed remotely from the vehicle.

Further modifications and variations can also be contemplated without departing from the scope of the systems and methods of the present disclosure as defined in the appended claims.

**Claims**

1. A method for providing a probabilistic representation of an arrangement of lanes on a roadway in an environment of an ego vehicle at a current time $t$, the ego vehicle having a sensor system for capturing sensor data from at least part of the roadway, the method comprising:

defining a plurality of lane arrangement scenarios in a model of the environment, each scenario being described by a plurality of model variables; identifying a plurality of lane arrangement presumptions $i$, each lane arrangement presumption $i$ defining an expected characteristic of an arrangement of lane markings in the model; and defining a set of first presumption functions $\Phi_i$ and a set of second presumption functions $\Psi_i$, each presumption function $\Phi_i$, $\Psi_i$ outputting a value dependent upon the adherence of one or more of the model variables of a respective lane arrangement scenario to a corresponding lane arrangement presumption $i$, wherein the set of second presumption functions $\Psi_i$ is of reduced complexity compared to the set of first presumption functions $\Phi_i$ and wherein at least one of the first presumption functions $\Phi_i$ is dependent on sensor data derived from the sensor system; the method further comprising:

defining, using the set of first presumption functions $\Phi_i$, a probability distribution **P** describing a probability of a given lane arrangement scenario being present in the environment at the current time $t$; defining, using the set of second presumption functions $\Psi_i$, a proposal distribution **Q** describing an alternate probability of a given lane arrangement scenario being present in the environment at the current time $t$; sampling lane arrangement scenarios from the proposal distribution **Q** to provide a plurality $K$ of sampled lane arrangement scenarios $s$; determining an importance weight $w_s$ for each of the plurality $K$ of sampled lane arrangement scenarios $s$ such that $w_s = P(s)/Q(s)$ for each sampled lane arrangement scenario $s$; the sampled lane arrangement scenarios $s$ and associated importance weights $w_s$ thereby together providing a probabilistic representation of the arrangement of lanes on the roadway at the current time $t$.

2. A method according to Claim 1, comprising: estimating an expected value $E_P$ under the probability distribution **P** of an output function $f(s)$ by summing the values of the output function $f(s)$ for each of the plurality $K$ of sample of lane arrangement scenarios $s$, weighted by the corresponding importance weight $w_s$.

3. A method according to Claim 2, wherein the output function $f(s)$ provides an expected value of each of the model variables, thereby to output an estimate of the lane arrangement in terms of the model variables.

4. A method according to Claim 3, comprising: estimating an expected value $E_P$ under the probability distribution $P$ of a further output function $f(s)$, said further output function $f(s)$ providing a squared deviation of at least one of the model variables.

5. A method according to Claim 2, wherein the output function $f(s)$ comprises a loss function.

6. A method according to any preceding claim, wherein the sensor system comprises a camera system, and wherein the method further comprises:

   receiving an image of the environment from the camera system;
   analysing the image to determine a set of lane marking likelihood values for a set of pixel units of the image; and
   mapping the lane marking likelihood values to a reference frame;
   and wherein at least one of the first presumption functions $\Phi_i$ is dependent on the mapped lane marking likelihood values.

7. A method according to any preceding claim, comprising determining the probability distribution $P$ from an energy function $E$ comprising a linear combination of output values of the first presumption functions $\phi_i$ evaluated at a preceding time $(t-1)$ and at the current time $t$, and in which each output value is weighted by a weight factor $\alpha_i$.

8. A method according to any preceding claim, comprising determining the proposal distribution $Q$ from an energy function $E'$, wherein the energy function $E'$ comprises a linear combination of output values of the second presumption functions $\Psi_i$ evaluated at the current time $t$, and in which each output value is weighted by a weight factor $\beta_i$.

9. A method according to any preceding claim comprising, after determining the importance weight $w_s$ for each of the plurality $K$ of sample lane arrangement scenarios $s$:

   defining a multinomial distribution $R$ for which the probability of sampling a scenario is given by the determined importance weight $w_s$ of that scenario $s$ divided by the linear sum of the importance weights $w_s$ of the plurality $K$ of sampled lane arrangement scenarios $s$;
   sampling lane arrangement scenarios from the multinomial distribution R to provide a plurality $K_r$ of re-sampled lane arrangement scenarios $s_r$;
   defining an updated proposal distribution $Q'$ based on the plurality $K_r$ of re-sampled lane ar-

rangement scenarios $s_r$;
sampling lane arrangement scenarios $s'$ from the updated proposal distribution $Q'$ to provide a further plurality $K'$ of sampled lane arrangement scenarios $s'$; and
determining an importance weight $w_{s'}$ for each of the further plurality $K'$ of sampled lane arrangement scenarios s' using the updated proposal distribution $Q'$.

10. A method according to Claim 10, comprising:

   defining an updated probability distribution $P'$ to describe the probability of a given lane arrangement scenario being present in the environment at a subsequent time $t+1$;
   before determining the updated proposal distribution $Q'$, transforming each of the plurality $K_r$ of re-sampled lane arrangement scenarios $s_r$ to a subsequent time $t+1$, such that the updated proposal distribution $Q'$ describes the alternate probability of a given lane arrangement scenario being present in the environment at the subsequent time $t+1$; and
   determining the updated importance weight $w_{s'}$ for each of the further plurality $K'$ of sample lane arrangement scenarios s' using the updated probability distribution $P'$ such that $w_{s'} = P'(s')/Q'(s')$, the updated importance weights $w_s'$ and associated sample lane arrangement scenarios s' thereby providing a probabilistic representation of the arrangement of lane markings on the roadway at the subsequent time $t+1$.

11. A system for providing a probabilistic representation of an arrangement of lanes on a roadway in an environment of an ego vehicle at a current time $t$, comprising:

   a sensor system configured to capture sensor data from at least part of the roadway;
   a data storage component; and
   a processor;

   wherein the data storage component is configured to store:

   a model of the environment describing a plurality of lane arrangement scenarios, each scenario being described by a plurality of variables of the model,
   a set of first presumption functions $\Phi_i$ and a set of second presumption functions $\Psi_i$, each presumption function $\Phi_i$, $\Psi_i$ outputting a value dependent upon the adherence of one or more of the model variables of a respective lane arrangement scenario to a corresponding lane arrangement presumption $i$, wherein the set of

second presumption functions $\Psi_i$ is of reduced complexity compared to the set of first presumption functions $\Phi_i$ and wherein at least one of the first presumption functions $\Phi_i$ is dependent on sensor data;

and wherein the processor is configured to:

define, using the set of first presumption functions $\Phi_i$, a probability distribution **P** describing a probability of a given lane arrangement scenario being present in the environment at the current time $t$;

define, using the set of second presumption functions $\Psi_i$, a proposal distribution **Q** describing an alternate probability of a given lane arrangement scenario being present in the environment at the current time $t$;

sample lane arrangement scenarios from the proposal distribution **Q** to provide a plurality $K$ of sampled lane arrangement scenarios $s$;

determine an importance weight $w_s$ for each of the plurality $K$ of sampled lane arrangement scenarios $s$ such that $w_s = \mathbf{P}(s)/\mathbf{Q}(s)$ for each sampled lane arrangement scenario $s$; and

output a probabilistic representation of the arrangement of the lanes based on the sampled lane arrangement scenarios $s$ and associated importance weights $w_s$.

12. A system according to Claim 11, wherein the processor is further configured to determine the set of first presumption functions $\Phi_i$ and the set of second presumption functions $\Psi_i$, and to store the set of first presumption functions $\Phi_i$ and the set of second presumption functions $\Psi_i$ in the data storage component.

13. A system according to Claim 11 or Claim 12, wherein the processor is further configured to estimate an expected value $E_P$ under the probability distribution **P** of an output function $f(s)$ by summing the values of the output function $f(s)$ for each of the plurality $K$ of sample of lane arrangement scenarios $s$, weighted by the corresponding importance weight $w_s$, and to output the expected value $E_P$ to a client.

Fig. 1A

Fig. 1B

Fig. 2A

Fig. 2B

Fig. 3A

Fig. 3B

**101** — Define lane arrangement scenarios in environment model

**102** — Identify presumptions defining expected lane characteristics

**103** — Define set of first presumption functions

**105** — Define set of second presumption functions

**104** — Define probability distribution $P$ for scenarios at time $t$

**106** — Define proposal distribution $Q$ scenarios at time $t$

**107** — Sample lane arrangement scenarios $s$

**108** — Determine importance weights $w_s$ for sampled scenarios $s$

**Fig. 4**

| | |
|---|---|
| 201 | Determine importance weights $w_s$ for plurality of scenarios $s$ |

| | |
|---|---|
| 202 | Estimate expected values under $P$ of output functions |

| | |
|---|---|
| 203 | Expected value of variables under $P$ |

| | |
|---|---|
| Deviation of variables under $P$ | 204 |

| | |
|---|---|
| 205 | Output estimated lane arrangement with uncertainty |

**Fig. 5**

30

20  $w_s = 0.7$  22

**Fig. 6A**

32

20  $w_s = 0.3$  22

**Fig. 6B**

24

36

20

34

22

**Fig. 7**

301 — Determine importance weights $w_s$ for plurality of scenarios $s$

302 — Estimate expected values under $P$ of output function

303 — Risk function as expected value of loss function under $P$

Possible decisions — 304

305 — Estimate losses for possible decisions

306 — Determine optimal decision

**Fig. 8**

401 — Receive image from camera system

402 — Analyse image to determine lane marking likelihood values for pixel units

403 — Map lane marking likelihood values to vehicle reference frame

404 — Input mapped lane marking likelihood values to one or more first constraint functions $\Phi_i$

**Fig. 9**

501 —— Determine importance weights $w_s$ for plurality of scenarios $s$

502 —— Define multinomial distribution $R$ based on importance weights $w_s$

503 —— Re-sample scenarios $s_r$ from multinomial distribution

504 —— Define updated proposal distribution $Q'$ for re-sampled scenarios $s_r$

505 —— Determine importance weights $w_{s'}$ for scenarios $s'$ sampled from $Q'$ where $w_{s'} = P(s')/Q'(s')$

506

**Fig. 10**

**Fig. 11**

**Fig. 12A**

**Fig. 12B**

700

710

712

714

716

702

704

706

708

**Fig. 13**

**EP 3 846 073 A1**

Europäisches
Patentamt

European
Patent Office

Office européen
des brevets

# EUROPEAN SEARCH REPORT

Application Number

EP 20 15 0382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS GUMPP ET AL: "Probabilistic hierarchical detection, representation and scene interpretation of lanes and roads", VEHICULAR ELECTRONICS AND SAFETY (ICVES), 2012 IEEE INTERNATIONAL CONFERENCE ON, IEEE, 24 July 2012 (2012-07-24), pages 211-216, XP032231144, DOI: 10.1109/ICVES.2012.6294309 ISBN: 978-1-4673-0992-9 * abstract * * items I.C; VI, VII.B * ----- | 1-13 | INV. G06K9/00 G06K9/62 |
| A | NIETO M ET AL: "On-board video based system for robust road modeling", CONTENT-BASED MULTIMEDIA INDEXING, 2008. CBMI 2008. INTERNATIONAL WORKSHOP ON, IEEE, PISCATAWAY, NJ, USA, 18 June 2008 (2008-06-18), pages 109-116, XP031286353, ISBN: 978-1-4244-2043-8 * abstract * * section 2 * ----- | 1-13 | |
| A | US 2016/180177 A1 (NGUYEN TUAN TRAN [DE] ET AL) 23 June 2016 (2016-06-23) * abstract * ----- -/-- | 1-13 | TECHNICAL FIELDS SEARCHED (IPC) G06K |

The present search report has been drawn up for all claims

| Place of search | Date of completion of the search | Examiner |
|---|---|---|
| The Hague | 6 July 2020 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

24

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATHIBELA BONOLO ET AL: "Reading the Road: Road Marking Classification and Interpretation", IEEE TRANSACTIONS ON INTELLIGENT TRANSPORTATION SYSTEMS, IEEE, PISCATAWAY, NJ, USA, vol. 16, no. 4, 1 August 2015 (2015-08-01), pages 2072-2081, XP011664674, ISSN: 1524-9050, DOI: 10.1109/TITS.2015.2393715 [retrieved on 2015-07-31] * abstract * * figure 1 * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 6 July 2020 | Philips, Petra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 15 0382

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2020

| Patent document cited in search report | Publication date | Patent family member(s) | Publication date |
|---|---|---|---|
| US 2016180177 A1 | 23-06-2016 | NONE | |

EPO FORM P0459

For more details about this annex : see Official Journal of the European Patent Office, No. 12/82